Europäisches Patentamt

European Patent Office

Office européen des brevets

(19)

(11) Publication number: **0 067 706 B1**

(12) **EUROPEAN PATENT SPECIFICATION**

(45) Date of publication of patent specification: **20.02.91**

(51) Int. Cl.⁵: **G01D 5/36**, G01D 5/34

(21) Application number: **82303086.1**

(22) Date of filing: **15.06.82**

(54) Optical transducer.

(30) Priority: **15.06.81 IT 6782181**
**23.12.81 IT 6866581**

(43) Date of publication of application:
**22.12.82 Bulletin 82/51**

(45) Publication of the grant of the patent:
**20.02.91 Bulletin 91/08**

(84) Designated Contracting States:
**DE FR GB**

(56) References cited:
US-A- 3 354 319    US-A- 3 552 857
US-A- 3 757 128    US-A- 4 078 173
US-A- 4 137 451    US-A- 4 196 994
US-A- 4 224 514

(73) Proprietor: **Ing. C. Olivetti & C., S.p.A.**
**Via G. Jervis 77**
**I-10015 Ivrea (Torino)(IT)**

(72) Inventor: **Carena, Ugo**
**Via Carandini 9**
**I-10015 Ivrea(IT)**
Inventor: **Boella, Marcello**
**Via Castello 1**
**I-10010 Loranze(IT)**
Inventor: **Rivera, Paolo**
**Via Botta 35**
**I-10019 Strambino, (Turin)(IT)**

(74) Representative: **Pears, David Ashley et al**
**REDDIE & GROSE 16 Theobalds Road**
**London WC1X 8PL(GB)**

Rank Xerox (UK) Business Services

## Description

The present invention relates to an optical transducer for detecting the position of a member which is movable with respect to a fixed structure, comprising a shutter connectable with the movable member and photosensitive cells for generating first and second electrical signals, as in the pre-characterising clause of claim 1.

An optical transducer of this type is known from US-A-4 224 514, in which there are provided four photosensitive cells, disposed at substantially four sides of a square and in which a sensor mask is provided between the shutter and the single cells to obtain from each cell an electrical signal having a waveform which varies substantially sinusoidally upon the movement of the shutter. The mask causes the signals in the four cells to be phased 90°. The signals from each two cells 180° out of phase are combined in two push-pull amplifiers to obtain two position signals 90° out of phase to determine the direction of movement of the movable member.

An encoder of this type is rather expensive in view of the individual registration of the components used therein to obtain a correct response in phase and in amplitude. Moreover, in the case of changing of the distribution of the light among the four cells, the generated signals will be affected by a consequent error in the phase or in the amplitude or in both.

The object of the present invention is to provide an optical encoder of low cost and in which the generated signals are hardly affected by errors in the case of dissymmetry in the light flux or changes in the operating parameter of the components which are used.

This object is met by the transducer of the invention which is defined in claim 1. The invention further provides a transducer as defined in claim 6.

These and other features of the invention will be clearly apparent from the following description of preferred embodiments given by way of non-limiting example, with reference to the accompanying drawings in which:

Figure 1 is a view in cross section of part of an optical transducer according to the invention,

Figure 2 is a front view on an enlarged scale of parts of the Figure 1 arrangement, in a first operating position,

Figure 3 shows the parts shown in Figure 2 in a second operating position,

Figure 4 is a further front view on an enlarged scale showing another part of the transducer shown in Figure 1,

Figure 5 is a circuit diagram showing the electrical circuit of the transducer according to the invention,

Figure 6 is a diagram showing some electrical signals of the circuit shown in Figure 5,

Figure 7 is an alternative form of the part of the arrangement shown in Figure 4,

Figure 8 is a cross section of part of an optical transducer according to the invention, with an alternative form of the shutter disc shown in Figure 1,

Figure 9 is a detail on an enlarged scale of the disc included in the transducer shown in Figure 8, and

Figure 10 is a view on an enlarged scale and in section taken along line X-X of the disc shown in Figure 9.

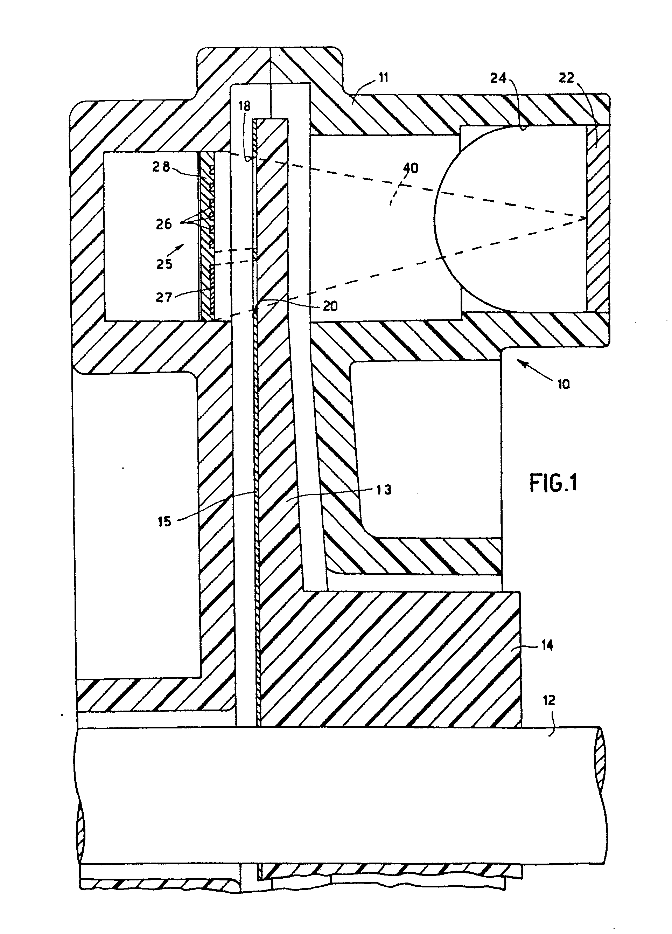

Referring to Figure 1, an optical transducer 10 according to the invention comprises a casing 11 for example of plastics material, which is of substantially parallelepiped shape, with a shaft 12 disposed rotatably therewithin. The structure of the casing 11 may be of any known type, for example of the type described in our published patent application GB 2 062 220.

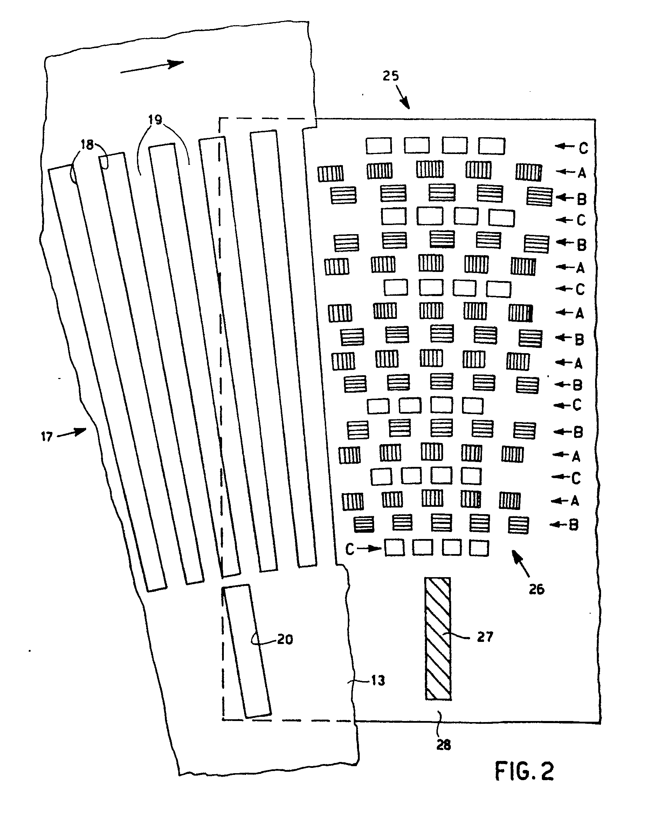

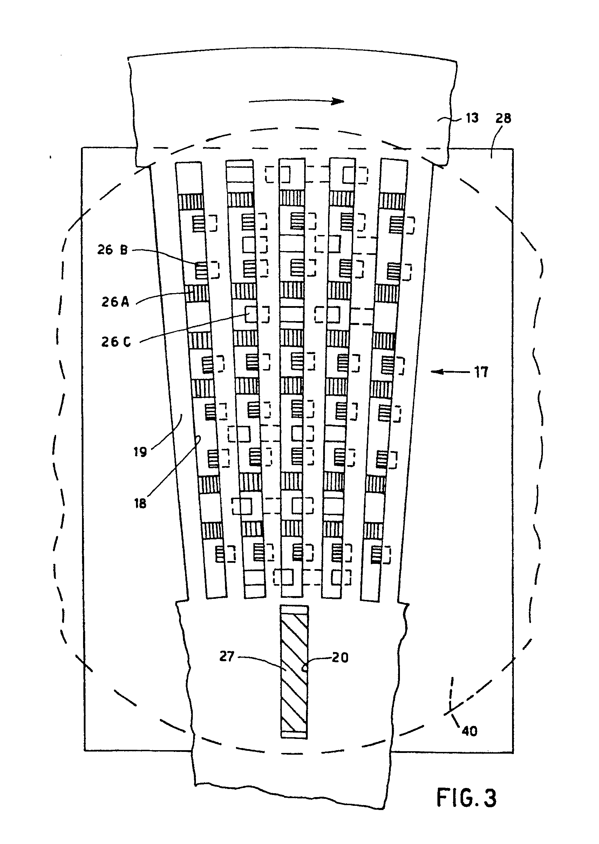

A disc 13 of transparent material such as plastics or glass is fixed to the shaft 12 by means of a hub portion 14. A front surface of the disc 13 is covered with a layer 15 of opaque material, having a substantially peripheral circular ring 17 (see Figures 2 and 3), in which are formed a plurality of transparent radial regions 18 which are equally spaced from each other and which are such as to define opaque regions 19 spaced from each other by the transparent regions 18. Also disposed in the layer 15 is a single transparent region 20 which is disposed further inwardly than the regions 18. The region 20 is wider than the regions 18, has its edges out-of-phase with respect to the edges of the regions 18, and performs the function of a synchronisation means. Alternatively, the disc 13 may be completely opaque and may be provided, at the position of the transparent regions 18, with corresponding apertures for the passage of light rays.

In the particular embodiment described herein, there are one hundred transparent regions 18, and the mean width thereof, which is equal to half the pitch, is about 0.5 mm. It will be appreciated that such data are given purely by way of indication and that such parameters may be completely different in other embodiments and for different purposes.

A light source 22 (see Figure 1) which is formed for example by a photodiode is disposed in a housing portion 24 of the casing 11, which is disposed in front of a small sector of the circular ring 17 of the disc 13.

Disposed opposite to the light source 22 and supported by the casing 11 is a light detector 25 which is formed by a plurality of photovoltaic cells 26 capable of co-operating with the transparent regions 18 and a single photovoltaic cell 27 capable of co-operating with the region 20, all the photovoltaic cells being disposed on a base plate 28. The form and displacement of the various photovoltaic cells 26 and the electrical connection thereof is one aspect of the invention and will now be described in detail hereinafter.

Each photovoltaic cell 26 (see Figure 2) has a long side which is equal to the width of each region 18, that is to say, about 0.5 mm, and a short side which is about 0.35 mm in length, so as to define a photosensitive area of about 0.175 mm$^2$. It will be appreciated that this is an average value in that, the regions 18 being radial, the width thereof is greater towards the periphery and smaller towards the centre of the disc.

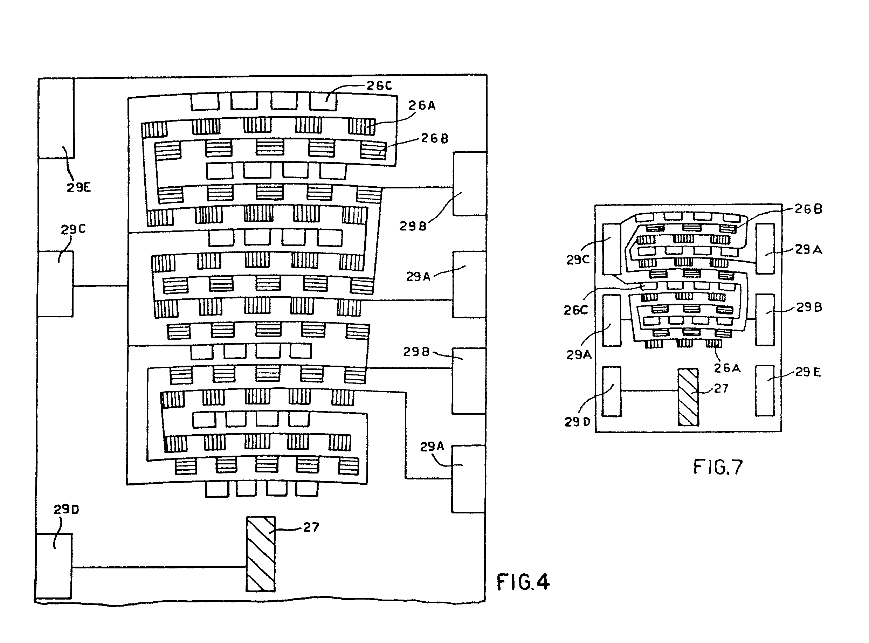

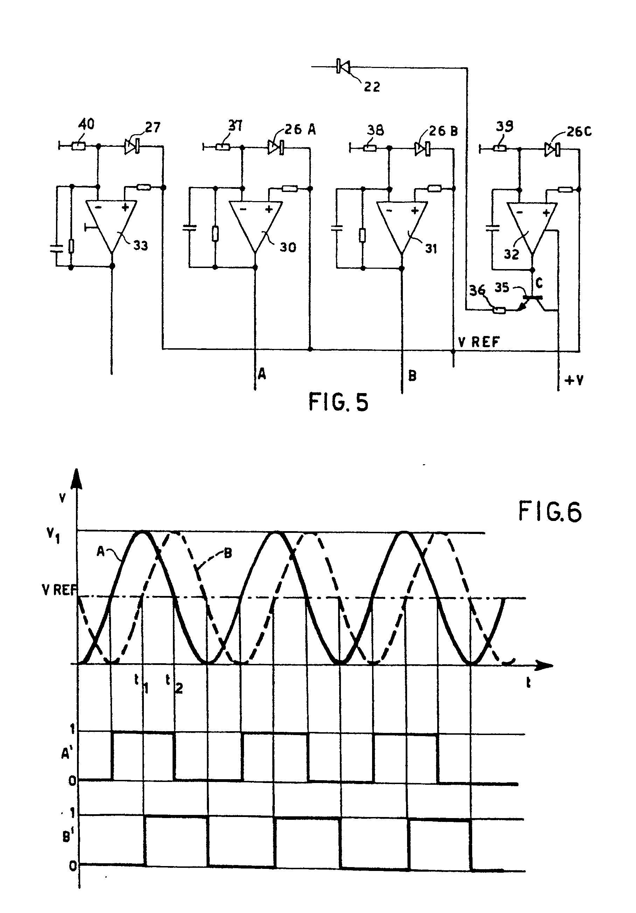

In the particular embodiment described herein, there are eighty four photovoltaic cells 26. They are disposed on a plane which is parallel to the layer 15 of the disc 13 and are subdivided into eighteen rows disposed on circumferences which are all substantially concentric to the axis of rotation of the disc 13. The eighteen rows are equally spaced from each other and are divided into three groups of six. The photovoltaic cells 26 of each group, which are indicated at 26A, 26B and 26C, are electrically connected together in parallel (see Figure 4) and are capable of generating respective Position signals A and B, and a control signal C (see Figure 6) in the manner which will be described hereinafter. The photo voltaic cells 26 and 27 are produced on a single substrate 28, for example of fused silicon, which represents the common electrode of the various cells. The electrical connections between the cells are made by conducting tracks which are provided on the substrate 28 in any known manner, which is not described herein for the sake of simplicity, during the process of manufacture of the detector 25. In particular, the connecting tracks between the photovoltaic cells 26A (see Figure 4) terminate at two small square portions 29A of conducting material, to which an electrical wire (not shown) is then soldered in known manner, to connect them in parallel. The connecting tracks as between the cells 26B terminate at two small square conducting portions 29B, which are also connected in parallel by means of another electrical wire. The cells 26C are all connected to a small square portion 29C and the single cell 27 is connected to a small square portion 29D. A further square portion 29E which is common to all the cells 26 and 27 is finally connected to the common base 28.

The photovoltaic cells 26A (Figures 2 and 3) which are indicated by vertical hatching are disposed in the second, sixth, eighth, tenth, fourteenth and sixteenth rows from the top, and are aligned with each other in a radial direction to form five columns at a constant pitch equal to the pitch between the regions 18 of the disc 13. The photovoltaic cells 26B which are indicated by horizontal hatching are disposed in the third, fifth, ninth, eleventh, thirteenth and seventeenth rows from the top in the immediate vicinities of the cells 26A. The cells 26B are also aligned in a radial direction to form five columns, and have a constant pitch equal to the pitch between the regions 18 of the disc 13. The columns of cells 26B are also displaced by a quarter of a pitch in a clockwise direction with respect to the columns of the cells 26A. This arrangement provides a constant phase relationship between the six cells of the five columns of cells 26A and 26B and the oppositely disposed regions 18 of the disc 13, which depends exclusively on the position of the shaft 12.

There are four photovoltaic cells 26C in each row, and they are disposed in the first, fourth, seventh, twelfth, fifteenth and eighteenth rows from the top, in a central region between the columns of cells 26A and 26B. The pitch of the cells 26C in a row is three quarters of the pitch between the other cells 26A and 26B. In addition, the extreme left-hand cell 26C in each of the first and eighteenth rows is aligned with a cell 26A; the extreme left-hand cell 26C of each of the fourth and seventh rows is aligned with a cell 26B; and the extreme right-hand cell 26C of the twelfth and fifteenth rows is aligned with a cell 26A. That arrangement gives a constant phase relationship only in respect of a group of cells 26C of various angular sectors and the oppositely disposed regions 18, while the other three groups of six cells 26C are of suitably different phases. In this way, when the disc 13 moves in front of the photodetector element 25, the total surface of the areas of the cells 26C which is illuminated by the light emitted by the light source 26 is substantially constant.

The electrical circuit which includes the photovoltaic cells 26 and 27 (see Figure 5) is substantially of known type and will be briefly described hereinafter.

Each group of photovoltaic cells 26A, 26B and 26C, illustrated herein as if they were single circuit components, is connected to the inputs of respective differential amplifiers 30, 31 and 32. The single photovoltaic cell 27 is connected to the inputs of a differential amplifier 33.

The photodiode 22 is supplied, by way of a resistor 36, by a transistor 35 having its collector connected to a constant voltage + V and having its base connected to the output of the amplifier 32. The common electrode of the photovoltaic cells 26A, 26B, 26C and 27, shown herein as that at the cathode, is connected to a reference voltage V REF which represents the mean value of the signals A and B at the outputs of the amplifiers 30 and 31, while the other electrode is connected to earth by way of biasing resistors 37, 38, 39 and 40. When the disc 13 rotates, the signals A and B are sinusoidal (see Figure 6) with respect to the reference value V REF and go from a minimum close to zero to + V1. The signals A and B are also out of phase relative to each other through 90°, just as the photovoltaic cells 26B are out of phase by a quarter of a pitch with respect to the cells 26A. Square signals A' and B' are produced by means of squaring circuits (not shown), and change in value when the signals A and B coincide with V REF.

The mode of operation of the optical transducer 11 described hereinbefore is as follows:

The light beam 40 (see Figures 1 and 3) which is emitted by the light source 22 encounters a sector of the disc 13 in such a way as to illuminate a part of the circular ring 17 and an adjacent part in which the synchronisation region 20 lies. The disc operates as a shutter means; the light which passes through the transparent regions 18 of the layer 15 selectively encounters the various photovoltaic cells 26A, 26B and 26C and, in each revolution of the disc 13, the light which passes through the transparent region 20 will impinge on the single photovoltaic cell 27.

While the cells 26A and 26B are alternately illuminated and darkened by the rotary movement of the disc 13, being disposed at the same pitch as the transparent regions 18, the cells 26C are averagely illuminated constantly and generate a signal C which is also substantially constant.

Figure 3 shows the operating condition wherein the transparent regions 18 are precisely axially in front of the cells 26A and the synchronisation region 20 is in front of the cell 27 which is 100% illuminated, while the cells 26B are 50% illuminated. It may be observed that the cells 26C are also illuminated over 50% of their total area. In that condition (moment t2 in Figure 6), the signal A is at its maximum, at a voltage V1, and the signal B coincides with the voltage V REF. After a rotary movement through a quarter of a pitch in a clockwise direction (see Figure 3), the regions 18 are axially in front of the cells 26B which are now 100% illuminated while the cells 26A are 50% illuminated and the cells 26C are still 50% illuminated. In this fresh condition which is not shown in the drawing but which can be easily deduced, the signal 1 (moment t2 in Figure 6) coincides with the voltage V REF and the signal B is at its maximum, at a voltage V1. After a further rotary movement of a quarter of a pitch in a clockwise direction, the cells 26A are completely obscured and the cells 26B and 26C are 50% illuminated (moment t3). Finally, after a further rotary movement of a quarter of a pitch, the cells 26B are completely obscured and the cells 26A and 26B are 50% illuminated.

The biasing resistors 37, 38 and 39 (see Figure 5), the gain of the amplifiers 30 or 31 and the resistor 36 are so designed that the photodiode 22 produces a light flux such as to generate at the outputs of the amplifiers 30 and 31, voltages which have a maximum value of V1 and which are symmetrical with respect to the voltage V REF. The result obtained remains absolutely stable in time, depending virtually exclusively on the stability of the passive components, and is not altered by variations in the characteristics of the electrical-optical components used. In fact, any variation in light flux produced by the photodiode 22 is detected by the cells 26C and amplified by the amplifier 32 which, by way of the transistor 35, provides for a correction in the power supply to the photodiode 22 until the response of the photodetectors 26C is re-stabilised, with a different value of current at the photodiode 22.

As the cells 26A, 26B and 26C are spread out over the area on which the light beam 40 is incident and are uniformly mingled, any asymmetry in the light beam 40 has no influence on the corresponding signals generated by the detection cells. In fact, being connected in groups in parallel with each other, the cells generate signals A, B and C which are the sum of the individual signals generated by each thereof. If the mean value of the light flux does not alter, there is no correction in respect of the power supply to the photodiode 22. On the other hand, just by detecting the illumination in each region of the working area, the signals A and B also remain unchanged, both in respect of values and in respect of phases. If, in contrast, a variation in the mean value is ascertained, that variation is corrected and the signals A and B are restored to their original value. The fact that the control detector 26C is disposed adjacent the position detectors 26A and 26B ensures faithful correspondence between the parameters to be measured and corrected and the parameters which are actually detected.

Another major advantage of the transducer according to the invention is that it does not require any individual calibration. In fact, it is sufficient for the detector 25 to have various cells 26A, 26B and 26C of correct dimensions and positions, which can be easily produced in the present state of the art, to ensure a constant response on the part of the complete transducer. Any variation in the characteristics in regard to response to illumination of the photodetector or any drift which may occur is in fact entirely detected and corrected by the cells 26C and the associated circuit in the region in which that occurs.

It will be clear from the description that the means for detecting the light emitted by the light source 22 comprise a multiplicity of sensitive elements 26, each having an area which is a fraction of the area of each transparent region of the disc 13. In addition, the sensitive elements 26 are distributed in a diffuse manner over the area encountered by the light beam generated by the light source, and are connected together in groups 26A, 26B and 26C in order to generate, for each group, a single electrical signal corresponding to the amount of light detected by the photodetector elements on passing the transparent regions 18 of the disc 13.

It will also be clear that one of the electrical signals generated by the cells 26 is capable of providing pilot control for the electrical power supply to the light source, in order to stabilise the signal C and thus the signals A and B.

It will be apparent that modifications and additions of components may be made in the above-described optical transducer, without thereby departing from the scope of the invention.

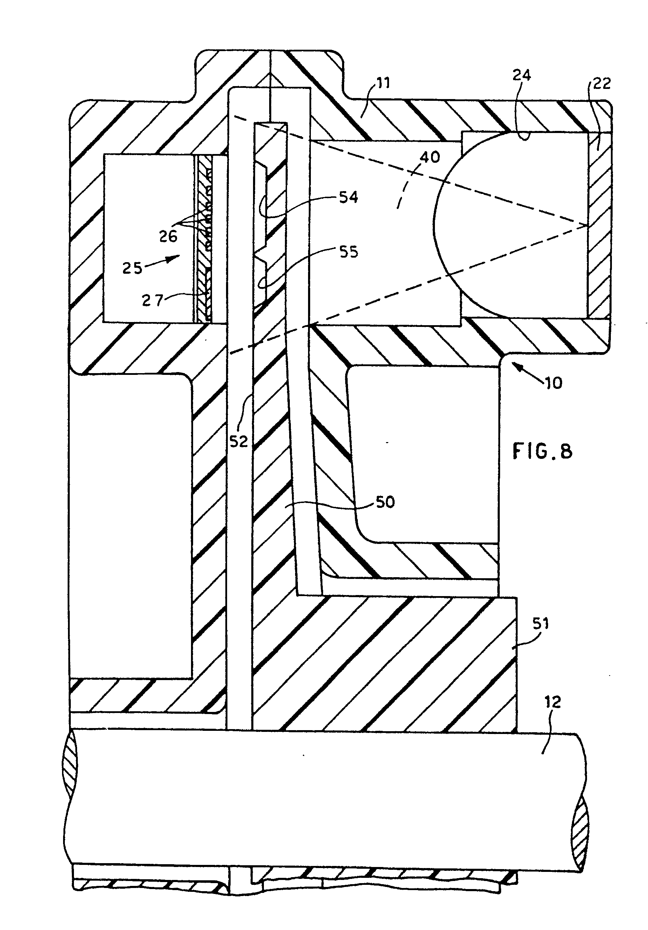

The arrangement of the cells 26 and/or the number thereof may be modified. The diagram shown in Figure 7 is concerned with a construction having a different arrangement and in which the number of cells in the groups 26A and 26B has been reduced. The number of control cells 26C with equal phases could be reduced, to the benefit of a smaller difference in phase between one group and the other. Even more generally, the transducer may be different from that described by way of example. It may be of linear type and/or may be coupled to the movable member in such a manner that the light is reflected by mirror regions instead of passing through apertures in the shutter member. As another alternative solution, the arrangement could be such that the movement of the movable member is transmitted to the light source-detector assembly instead of to the shutter member. In addition, the diffuse distribution of the sensitive elements may be limited only to one or to the two position sensors and/or the control sensor.

In addition, in accordance with a further feature of the invention, a shutter disc 50 (see Figure 8) of transparent plastics material, for polymethylmethacrylate, may be used instead of the above-described disc 13.

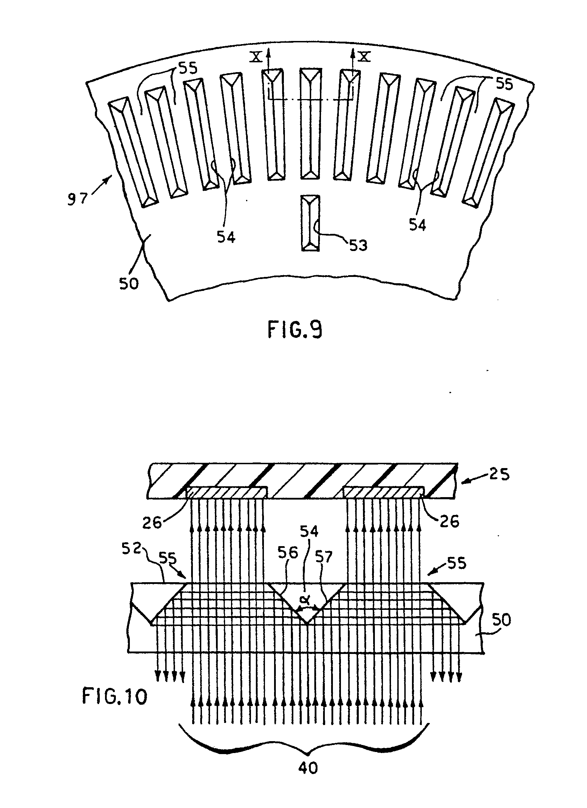

The disc 50 has a hub portion 51 by means of which it is fixed to the rotary shaft 12. On a front surface 52, and along a substantially peripheral circular ring configuration 97 (see Figure 9), the disc 50 comprises one hundred radial apertures or recesses 54 which are of a V-shape and which each have an apex angle $\alpha$ of 90° (see Figure 10). The angle $\alpha$ is selected in consideration of the refractive index of the material used for making the disc 50 and the element in which the disc rotates, which is normally but not necessarily air. By way of example, if the disc 50 is of plastics material or glass, the angle $\alpha$ is less than 105°. The apertures or slots 54 are at equal angular spacings from each other, have a mean width of about 0.5 mm, which is equal to half the pitch, and are such as to define spaced, perfectly transparent flat surfaces or regions 55 therebetween.

Also disposed on the front surface 52 of the disc 50 is a single radial aperture or slot 53 (see Figure 9). The aperture 53 is also of a V-shape, with an apex angle of 90°, and performs the function of a synchronisation element. The apertures or slots 54 and 53 operate as shutter elements for entirely reflecting or transmitting the light rays 40 (see Figure 3) which impinge on the disc from the non-apertured part. More particularly, the rays which encounter a transparent region 55 pass therethrough, without being diverted, the angle of incidence between their path and the plane of the surface 52 being 90°. In contrast, the rays which arrive at the inside surfaces 56 and 57 of each aperture or slot 54, 55 are totally deflected and reflected, the angle of incidence between the path thereof and the plane of the surfaces 56 and 57 being 45°. In order for that to take place, the surfaces 52, 56 and 57 must be perfectly transparent and clear. This can be easily and economically achieved during the phase of moulding the disc 50, without the necessity for additional operations. The radial apertures or slots 53 and 54 are also formed during the operation of moulding the disc 50.

The shutter elements, rather than being formed by V-shaped recesses may be formed by cuneiform raised portions or points, with an internal apex angle less than the limit angled $\alpha$.

Finally, it should be noted that the shutter elements 53 and 54 may be provided either on the front surface of the disc 50 which is towards the light emitting means or on the opposite face, as illustrated in Figure 10.

## Claims

1. An optical transducer for detecting the position of a member which is movable with respect to a fixed structure, comprising a shutter (15) connectable with the said member and provided with a plurality of interruption regions (19) between transparent regions; a light source (22) to illuminate a portion of the shutter; and a plurality of photosensitive cells (26) associated with the light source and illuminable by light from the light source emerging from the transmission regions of the shutter, wherein the photosensitive cells are subdivided into a first group (26A) and a second group (26B) of cells for generating a first electrical signal (A) and a second electrical signal (B), and wherein the two signals are out of phase with each other and are indicative of the relative movement between the shutter (15) and the cells (26), characterized in that

the photosensitive cells each have an area which is a fraction of the area of each of the transmission regions (18) and are distributed diffusely over the area encountered by the light beam generated by the light source (22) which passes through the transmission regions of the shutter;

each said first and second group (26A, 26B) consist of a multiplicity of the photosensitive cells which generate electrical signals substantially in phase with each other;

the first group of cells (26A) has a first phase relationship with the transmission regions, which is different from the phase relationship of the photosensitive cells of the other group (26B); and

the photosensitive cells of the first group of cells (26A) and the photosensitive cells of the second group of cells (26B) are electrically connected together to generate the first electrical signal (A) and the second electrical signal (B), respectively, both signals (A, B) corresponding to the amount of light detected by the multiplicity of cells on passing through the transparent regions of the shutter (13, 50).

2. An optical transducer according to claim 1, characterized in that the photo-sensitive cells of each group (26A or 26B) are connected in parallel and in that the said first signal (A) and second signal (B) are the sum of the output signals of each of the cells of the first group and the second group respectively.

3. An optical transducer according to claim 1 or 2, characterized in that each one of said photosensitive cells has a width substantially equal to the width of each one of said transmission regions, and has a height smaller than the height of each one of the transmission regions.

4. An optical transducer according to claim 1, 2 or 3, characterized in that individual photodetector cells of a third group (26C) of photodetector cells are interspersed between the cells of the first and second groups (26A, 26B) and are mutually phase-shifted in such a way that the sum of the areas thereof which are illuminated by the light passing through the transparent regions is constant.

5. An optical transducer according to claim 4, characterized in that the photodetector cells of the said third group (26C) are electrically connected together to generate a signal (C) which is indicative of the amount of light emitted by the light source and which is capable of providing regulation for the electrical power supply, to stabilise the said signal.

6. An optical transducer for detecting the position of a member which is movable with respect to a fixed structure, comprising a shutter (15) connectable with the said member and provided with a plurality of interruption regions (19) between transparent regions; a light source (22) to illuminate a portion of the shutter; a position photosensor (26) associated with the light source, illuminable by light from the light source emerging from the transmission regions of the shutter; and a control photosensor (26C), wherein the position photosensor is subdividced into a group (26A) of position photosensitive cells for generating a position electrical signal (A) indicative of the relative movement between the shutter (15) and the cells (26), and wherein the control photosensor is illuminated by a portion of the light from the light source for generating a stabilization electrical signal for the said light source, characterized in that

the control photosensor (26C) is subdivided into a group of control photosensitive cells;

the position photosensitive cells and the control photosensitive cells each have an area which is a fraction of the areas of each of the transmission regions (18) and are distributed diffusely over the area encountered by the light beam generated by the light source (22) which passes through the transmission regions of the shutter;

the group (26A) of position photosensitive cells consists of a multiplicity of cells having an equal phase relationship with the transmission regions and which generate electrical signals substantially in phase with each other;

the control photosensitive cells (26C) are disposed in the immediate vicinities of the position photodetector cells (26A, 26B), have phase relationships which are individually different with respect to the transmission regions and are connected together in such a way as to generate the stabilisation signal independently of the position of the movable member; and

the cells of the group of position photosensitive cells (26A) and the cells of the group of control photosensitive cells (26C) are electrically connected together to generate the position electrical signal (A) and the control electrical signal (C), respectively, both signals (A, C) corresponding to the amount of light detected by the multiplicity of cells on passing through the transparent regions of the shutter (13, 50).

7. A transducer according to claim 6, characterized in that the said control photosensitive cells (26C) are disposed in such a way that the active area thereof which is illuminated by the light issuing from the transmission regions is substantially independent of the position of the shutter member (13, 50) with respect to the light source (22).

8. A transducer according to any of the preceding claims, in particular for a movable member of rotary type, characterized in that the shutter comprises a disc (13) mounted rotatably within a casing (11), in that the light interruption regions are formed by opaque sectors of the disc and the transmission regions are formed by transparent sectors which transmit the light from the light source to the photosensitive cells (26).

9. An optical transducer according to claim 8, characterized in that the photosensitive cells (26) are disposed on a plane which is parallel to that in which the opaque sectors and the transparent sectors are disposed, and are arranged in a plurality of rows which are substantially concentric with respect to the axis of rotation of the disc (13).

10. An optical transducer according to claim 8 or 9, characterized in that the said disc is made of transparent material having two faces which are parallel to each other, and define said transmission regions and wherein the interruption regions are formed by V-shaped elements (54) provided on one of said faces and capable of totally deflecting the light incident thereon.

11. An optical transducer according to claim 10, characterized in that the V-shaped elements (54) are recesses.

12. A disc according to claim 11, characterized in that the transparent material is plastics and in that the recesses (54) are formed during the operation of moulding the disc.

13. A disc according to claim 10, 11 or 12, characterized in that the angle at the apex formed by the inside surfaces of each V-shaped element is less than 105°.

14. A disc according to claim, 10, 11, 12 or 13, characterized in that the faces of the disc and the surfaces of each V-shaped element (54) are perfectly transparent and clear.

15. An optical transducer according to any of the preceding claims characterized in that the photosensitive cells comprise photovoltaic cells (26) carried by a single substrate (28).

16. An optical transducer according to claim 15, characterized in that the cells to be connected in parallel are connected by conductive tracks carried by the single substrate.

**Revendications**

1. Capteur optique permettant de détecter la position d'un élément qui est mobile par rapport à une structure fixe, comprenant un obturateur (15) relié à l'élément et comportant une pluralité de régions d'interruption (19) situées entre des régions transparentes ; une source de lumière (22) afin d'éclairer une partie de l'obturateur, et une pluralité de cellules photosensibles (26) associées à la source de lumière et susceptible d'être éclairées par la lumière de la source de lumière qui provient des régions de transmission de l'obturateur, dans lequel les cellules photosensibles sont subdivisées en un premier groupe (26A) et en un second groupe (26B) de cellules permettant de générer un premier signal électrique (A) et un second signal électrique (B), et dans lequel les deux signaux sont déphasés l'un par rapport à l'autre et indiquent le mouvement relatif qui existe entre l'obturateur (15) et les cellules (26), caractérisé en ce que :

les cellules photosensibles ont chacune une surface qui est une fraction de la surface de chacune des régions de transmission (18) et sont distribuées de manière diffuse sur la surface atteinte par le faisceau de lumière généré par la source de lumière(22) qui traverse les régions de transmission de l'obturateur ;

chacun des premier et second groupes (26A, 26B) est composé d'une multiplicité de cellules photosen sibles qui génèrent des signaux électriques sensible-ment en phase les uns par rapport aux autres ;

le premier groupe de cellules (26A) est en relation avec les régions de transmission suivant une première phase qui est différente de la relation de phase des cellules photosensibles de l'autre groupe (26B) ; et

les cellules photosensibles du premier groupe de cellules (26A) et les cellules photosensibles du second groupe de cellules (26B) sont reliées électriquement ensemble afin de générer respectivement le premier signal électrique (A) ainsi que le second signal électrique (B), ces deux signaux (A), (B) correspondant à la quantité de lumière détectée par la multiplicité de cellules lorsqu'elle traverse les régions transparentes de l'obturateur (13, 50).

2. Capteur optique selon la revendication 1, caractérisé en ce que les cellules photosensibles de chaque groupe (26A ou 26B) sont reliées en parallèle et en ce que le premier signal (A) et le second signal (B) sont respectivement la somme des signaux de sortie de chacune des cellules du premier groupe et du second groupe.

3. Capteur optique selon la revendication 1 ou la revendication 2, caractérisé en ce que chacune des cellules photosensibles a une largeur sensiblement égale à la largeur de chacune des régions de transmission, et a une hauteur plus petite que la hauteur de chacune des régions de tansmission.

4. Capteur optique selon l'une des revendications 1, 2 ou 3, caractérisé en ce que les cellules individuelles de photodétecteur d'un troisième groupe (26C) de cellules de photodétecteur sont intercalées entre les cellules des premier et second groupes (26A, 26B), et sont mutuellement décalées en phase de telle sorte que la somme de leurs surfaces qui sont éclairées par la lumière qui traverse les régions transparentes soit constante.

5. Capteur optique selon la revendication 4, caractérisé en ce que les cellules de photodétecteur du troisième groupe (26C) sont électriquement reliées ensemble afin de générer un signal (C) qui indique la quantité de lumière émise par la source de lumière et qui est capable de fournir une régulation pour l'alimentation en puissance électrique, afin de stabiliser le signal.

6. Capteur optique permettant de détecter la position d'un élément qui est mobile par rapport à une structure fixe, comprenant un obturateur (15) relié à l'élément et comportant une pluralité de régions d'interruption (19) situées entre des régions transparentes; une source de lumière (22) afin d'éclairer une partie de l'obturateur ; un photodétecteur de position (26) associé à la source de lumière et susceptible d'être éclairé par la lumière de la source de lumière qui provient des régions de transmission de l'obturateur ; et un photodétecteur de contrôle (26C), dans lequel le photodétecteur de position est subdivisé en un groupe (26A) de cellules photosensibles de position qui permettent de générer un signal électrique de position (A) qui indique le mouvement relatif qui existe entre l'obturateur (15) et les cellules (26), et dans lequel le photodétecteur de contrôle est éclairé par une partie de la lumière de la source de lumière afin de générer un signal électrique de stabilisation pour la source de lumière,
caractérisé en ce que :
le photodétecteur de contrôle (26C) est subdivisé en un groupe de cellules photosensibles de contrôle ;
les cellules photosensibles de position et les cellules photosensibles de contrôle ont chacune une surface qui est une fraction des surfaces de chacune des régions de transmission (18), et sont distribuées de manière diffuse sur la surface éclairée par le faisceau de lumière généré par la source de lumière (22) qui traverse les régions de transmission de l'obturateur ;
le groupe (26A) de cellules photosensibles de position est constitué par une multiplicité de cellules qui sont en phase avec les régions de transmission et qui génèrent des signaux électriques sensiblement en phase les uns par rapport aux autres ;
les cellules photosensibles de contrôle (26C) sont placées au voisinage immédiat des cellules de photodétecteur de position (26A, 26B), sont liées suivant des phases qui sont individuellement différentes avec les régions de transmission et sont reliées ensemble de manière à générer le signal de stabilisation indépendamment de la position de l'élément mobile ; et
les cellules du groupe de cellules photosensibles de position (26A) et les cellules du groupe de cellules photosensibles de contrôle (26C) sont reliées électriquement ensemble afin de générer respectivement le signal électrique de position (A) et le signal électrique de contrôle (C), ces deux signaux (A, C) correspondant à la quantité de lumière détectée par la multiplicité de cellules lors de la traversée des régions transparentes de l'obturateur (13, 50).

7. Capteur selon la revendication 6, caractérisé en ce que les cellules photosensibles de contrôle (26C) sont disposées de manière à ce que leur surface active qui est éclairée par la lumière qui provient des régions de transmission soit sensiblement indépendante de la position de l'élément formant obturateur (13, 50) par rapport à la source de lumière (22).

8. Capteur selon l'une quelconque des revendications précédentes, en particulier pour un élément mobile du type rotatif, caractérisé en ce que l'obturateur comprend un disque (13) monté à rotation à l'intérieur d'un boîtier (11), en ce que les régions d'interruption de lumière sont formées par des secteurs opaques du disque et en ce que les régions de transmission sont formées par des secteurs transparents qui transmettent la lumière qui provient de la source de lumière sur les cellules photosensibles (26).

9. Capteur optique selon la revendication 8, caractérisé en ce que les cellules photosensibles (26) sont placées sur un plan qui est parallèle à celui dans lequel les secteurs opaques et les secteurs transparents sont placés, et sont arrangées suivant une pluralité de rangées qui sont sensiblement concentriques par rapport à l'axe de rotation du disque (13).

10. Capteur optique selon la revendication 8 ou 9, caractérisé en ce que le disque est réalisé en un matériau transparent qui a deux faces qui sont parallèles l'une par rapport à l'autre et qui définissent des régions de transmission, et dans lequel les régions d'interruption sont formées par des éléments en forme de V (54) qui sont ménagés sur une des faces et qui sont capables de dévier totalement la lumière qui arrive en incidence sur eux.

11. Capteur optique selon la revendication 10, caractérisé en ce que les éléments en forme de V (54) sont des évidements.

12. Disque selon la revendication 11, caractérisé en ce que le matériau transparent est du plastique et en ce que les évidements (54) sont formés lors de l'opération de moulage du disque.

13. Disque selon l'une des revendications 10, 11 ou 12, caractérisé en ce que l'angle au niveau du sommet formé par les surfaces intérieures de chaque élément en forme de V est inférieur à 105°.

14. Disque selon l'une des revendications 10, 11, 12 ou 13, caractérisé en ce que les faces du disque et les surfaces de chacun des éléments en forme de V (54) sont parfaitement transparentes et nettes.

15. Capteur optique selon l'une quelconque des revendications précédentes, caractérisé en ce que les cellules photosensibles comprennent des cellules photovoltaïques (26) portées par un unique substrat (28).

16. Capteur optique selon la revendication 15, caractérisé en ce que les cellules qui doivent être reliées en parallèle sont reliées par des lignes conductrices portées par l'unique substrat.

## Ansprüche

1. Optischer Umformer zum Messen der Lage eines relativ zu einem feststehenden Gebilde beweglichen Gliedes, mit einem Verschluß (15), der mit dem erwähnten Glied verbindbar und mit mehreren Unterbrechungszonen (19) zwischen transparenten Zonen versehen ist; einer Lichtquelle (22) zum Beleuchten eines Teils des Verschlusses und mehreren lichtempfindlichen Zellen (26), die der Lichtquelle zugeordnet und durch Licht der Lichtquelle beleuchtbar sind, das aus den Transmissionszonen des Verschlusses austritt, wobei die lichtempfindlichen Zellen in eine erste Gruppe (26A) und eine zweite Gruppe (26B) von Zellen zum Erzeugen eines ersten elektrischen Signals (A) und eines zweiten elektrischen Signals (B) unterteilt und die beiden Signale gegeneinander phasenverschoben sind und ein Maß für die Relativbewegung zwischen dem Verschluß (15) und den Zellen (26) darstellen, **dadurch gekennzeichnet**, daß die lichtempfindlichen Zellen jeweils eine Fläche aufweisen, die einen Bruchteil der Fläche jeder der Transmissionszonen (18) ist, und diffus über die Fläche verteilt sind, die durch den Lichtstrahl beaufschlagt wird, der durch die Lichtquelle (22) erzeugt wird und durch die Transmissionszonen des Verschlusses hindurchgeht; daß die erste und die zweite Gruppe (26A, 26B) jeweils aus einer Vielzahl lichtempfindlicher Zellen bestehen, die im wesentlichen phasengleiche elektrische Signale erzeugen; daß die erste Gruppe von Zellen (26A) eine erste Phasenbeziehung zu den Transmissionszonen aufweist, die von der Phasenbeziehung der lichtempfindlichen Zellen der anderen Gruppe (26B) abweicht; und daß die lichtempfindlichen Zellen der ersten Gruppe (26A) und die lichtempfindlichen Zellen der zweiten Gruppe (26B) elektrisch miteinander verbunden sind, um jeweils das erste elektrische Signal (A) und das zweite elektrische Signal (B) zu erzeugen, wobei beide Signale (A, B) der Lichtmenge entsprechen, die durch die Vielzahl von Zellen beim Durchgang durch die transparenten Zonen des Verschlusses (13, 50) festgestellt wird.

2. Umformer nach Anspruch 1,
**dadurch gekennzeichnet**
daß die lichtempfindlichen Zellen jeder Gruppe (26A oder 26B) parallelgeschaltet sind und daß das erste Signal (A) und das zweite Signal (B) jeweils die Summe der Ausgangssignale aller Zellen der ersten Gruppe und der zweiten Gruppe sind.

3. Umformer nach Anspruch 1 oder 2,
**dadurch gekennzeichnet,**
daß die Breite aller lichtempfindlichen Zellen im wesentlichen gleich der Breite jeder der Transmissionszonen ist und die Höhe aller lichtempfindlichen Zellen kleiner als die Höhe jeder der Transmissionszonen ist.

4. Umformer nach Anspruch 1, 2 oder 3,
**dadurch gekennzeichnet,**
daß einzelne Lichtdetektorzellen einer dritten Gruppe (26C) von Lichtdetektorzellen zwischen den Zellen der ersten und zweiten Gruppe (26A, 26B) angeordnet und relativ zueinander so phasenverschoben sind, daß die Summe ihrer Flächen, die durch das durch die transparenten Zonen hindurchgehende Licht beleuchtet werden, konstant ist.

5. Umformer nach Anspruch 4,
**dadurch gekennzeichnet,**
daß die Lichtdetektorzellen der dritten Gruppe (26C) elektrisch miteinander verbunden sind, um ein Signal (C) zu erzeugen, das ein Maß für die Lichtmenge darstellt, die durch die Lichtquelle abgegeben wird, und das eine Regelung der elektrischen Stromversorgung bewirkt, um das erwähnte Signal zu stabilisieren.

6. Umformer zum Feststellen der Lage eines relativ zu einem feststehenden Gebilde beweglichen Gliedes, mit einem Verschluß (15), der mit dem erwähnten Glied verbunden und mit mehreren Unterbrechungszonen (19) zwischen transparenten Zonen versehen ist; einer Lichtquelle (22) zum Beleuchten eines Teils des Verschlusses; einem Lage-Lichtfühler (26), der der Lichtquelle zugeordnet und durch Licht der Lichtquelle beleuchtbar ist, das aus den Transmissionszonen des Verschlusses austritt; und einem Steuerungs-Lichtfühler (26C), wobei der Lage-Lichtfühler in eine Gruppe (26A) von lichtempfindlichen Lage-Zellen zum Erzeugen eines elektrischen Lagesignals (A) unterteilt ist, das ein Maß für die Relativbewegung zwischen dem Verschluß (15) und den Zellen (26) darstellt, und wobei der Steuerungs-Lichtfühler durch einen Teil des Lichtes der Lichtquelle beleuchtet wird, um ein elektrisches Stabilisierungssignal für die Lichtquelle zu erzeugen,
**dadurch gekennzeichnet,**
daß der Steuerungs-Lichtfühler (26C) in eine Gruppe von lichtempfindlichen Steuerungszellen unterteilt ist; die lichtempfindlichen Lagezellen und die lichtempfindlichen Steuerungszellen jeweils eine Fläche aufweisen, die einen Bruchteil der Flächen jeder der Transmissionszonen (18) ist, und diffus über die Fläche verteilt sind, die durch den Lichtstrahl beaufschlagt wird, der von der Lichtquelle (22) erzeugt wird und durch die Transmissionszonen des Verschlusses hindurchgeht; die Gruppe (26A) von lichtempfindlichen Lagezellen aus einer Vielzahl von Zellen besteht, die die gleiche Phasenbeziehung zu den Transmissionszonen aufweisen und elektrische Signale erzeugen, die im wesentlichen miteinander in Phase sind; die lichtempfindlichen Steuerungszellen (26C) in unmittelbarer Nachbarschaft der lichtempfindlichen Lagezellen (26A, 26B) angeordnet sind, Phasenbeziehungen aufweisen, die individuell in bezug auf die Transmissionszonen unterschiedlich sind, und miteinander so verbunden sind, daß sie das Stabilisierungssignal unabhängig von der Lage des beweglichen Gliedes erzeugen; und die Zellen der Gruppe von lichtempfindlichen Lagezellen (26A) und die Zellen der Gruppe von lichtempfindlichen Steuerungszellen (26C) elektrisch miteinander verbunden sind, um jeweils das elektrische Lagesignal (A) und das elektrische Steuerungssignal (C) zu erzeugen, wobei die beiden Signale (A, C) der Lichtmenge entsprechen, die durch die Vielzahl von Zellen beim Durchgang durch die transparenten Zonen des Verschlusses (13, 50) festgestellt wird.

7. Umformer nach Anspruch 6,
**dadurch gekennzeichnet,**
daß die lichtempfindlichen Steuerungszellen (26C) so angeordnet sind, daß ihre aktive Fläche, die durch das aus den Transmissionszonen austretende Licht beleuchtet wird, weitgehend unabhängig von der Lage des Verschlußgliedes (13, 50) relativ zu der Lichtquelle (22) ist.

8. Umformer nach einem der vorstehenden Ansprüche, insbesondere für ein bewegliches Glied, das drehbar ist,
**dadurch gekennzeichnet,**
daß der Verschluß eine in einem Gehäuse (11) drehbar gelagerte Scheibe (13) aufweist und daß die Lichtunterbrechungszonen durch opake Sektoren der Scheibe und die Transmissionszonen durch transparente Sektoren gebildet sind, die das Licht von der Lichtquelle zu den lichtempfindlichen Zellen (26) durchlassen.

9. Umformer nach Anspruch 8,
   **dadurch gekennzeichnet,**
   daß die lichtempfindlichen Zellen (26) in einer Ebene angeordnet sind, die parallel zu derjenigen ist, in der die opaken Sektoren liegen, und die transparenten Sektoren in mehreren in bezug auf die Drehachse der Scheibe (13) im wesentlichen konzentrischen Reihen angeordnet sind.

10. Umformer nach Anspruch 8 oder 9,
    **dadurch gekennzeichnet,**
    daß die erwähnte Scheibe aus transparentem Material mit zwei zueinander parallelen und die Transmissionszonen begrenzenden Oberflächen gebildet ist und daß die Unterbrechungszonen durch V-förmige Elemente (54) gebildet sind, die auf einer der erwähnten Oberflächen vorgesehen sind und das darauf auftreffende Licht vollständig reflektieren können.

11. Umformer nach Anspruch 10,
    **dadurch gekennzeichnet,**
    daß die V-förmigen Elemente (54) Vertiefungen sind.

12. Scheibe nach Anspruch 11,
    **dadurch gekennzeichnet,**
    daß das transparente Material Kunststoff ist und daß die Vertiefungen (54) beim Formen der Scheibe ausgebildet werden.

13. Scheibe nach einem der Ansprüche 10 bis 12,
    **dadurch gekennzeichnet,**
    daß der am Scheitel durch die Innenflächen jedes V-förmigen Elements gebildete Winkel kleiner als 105° ist.

14. Scheibe nach einem der Ansprüche 10 bis 13,
    **dadurch gekennzeichnet,**
    daß die Oberflächen der Scheibe und jedes der V-förmigen Elemente (54) vorzugsweise transparent und klar sind.

15. Umformer nach einem der vorstehenden Ansprüche,
    **dadurch gekennzeichnet,**
    daß die lichtempfindlichen Zellen photovoltaische Zellen (26) aufweisen, die durch ein einziges Substrat (28) getragen werden.

1. Umformer nach Anspruch 15,

**dadurch gekennzeichnet,**
daß die Zellen, die parallelgeschaltet werden sollen, durch leitende Bahnen verbunden sind, die von dem einzigen Substrat getragen werden.

FIG.1

FIG. 2

FIG.3

FIG.7

FIG.4

FIG. 5

FIG.6

FIG.8

FIG.9

FIG.10